# DEMANDE DE BREVET EUROPEEN

(11) **EP 4 300 259 A1**
(43) Date de publication de la demande: **03.01.2024**
(21) Numéro de dépôt: 23179825.7
(22) Date de dépôt: 16.06.2023
(51) Int. Cl.: G06F 1/3209, G06F 1/3287

(54) **GESTION DE CONSOMMATION D'ÉNERGIE D'UN APPAREIL**

(30) Priorité: 01.07.2022 FR 2206704
(71) Demandeur: Orange, 92130 Issy-les-Moulineaux (FR)
(72) Inventeur: NAJMI, Elyass, 92326 Châtillon Cedex (FR); BENDIABDALLAH, Halim, 92326 Châtillon Cedex (FR)
(74) Mandataire: Plasseraud IP

(57) **Abrégé**

Un procédé de pilotage de l'alimentation d'une passerelle d'accès (1), et une telle passerelle d'accès mettant en oeuvre le procédé et permettant à au moins un dispositif (41) d'un réseau local d'accéder à un réseau de communication étendu (30). Le procédé comprend :
a. obtenir un mode d'alimentation planifié en fonction d'une date courante ;
b. analyser des données acheminées par la passerelle d'accès ;
c. si des conditions correspondant au mode d'alimentation planifié sont respectées pour les données analysées, commander un passage dans le mode d'alimentation planifié.

## Description

### Domaine technique

La présente divulgation relève du domaine de la sobriété énergétique.

### Technique antérieure

Il est connu d'adapter la consommation d'énergie de certains appareils électriques en fonction de leurs usages. Ceci est par exemple commun pour les téléviseurs, les écrans ou les ordinateurs de bureau qui présentent des fonctions de modération de la consommation énergétique. Dans le langage courant, on parle généralement de « mode veille ». D'autres appareils sont dépourvus de telles fonctions, souvent parce qu'il est considéré que leur usage est continu ou presque, ou qu'imposer des limitations d'accès à l'énergie de certains composants électroniques tendrait à les dégrader à long terme. Ceci est particulièrement vrai pour les équipements des réseaux de télécommunication, dont les appareils formant des passerelles d'accès entre réseaux ou parties d'un même réseau, par exemple les appareils multifonctions qui sont communément appelés « box internet ».

### Résumé

La demanderesse est allée à l'encontre de ces préjugés : la présente divulgation vient améliorer la situation.

Il est proposé un procédé de pilotage de l'alimentation d'une passerelle d'accès. La passerelle permet à au moins un dispositif d'un réseau local d'accéder à un réseau de communication étendu. Le procédé est mis en oeuvre par la passerelle d'accès et comprend :
a. obtenir un mode d'alimentation planifié en fonction d'une date courante ;
b. analyser des données acheminées par la passerelle d'accès ;
c. si des conditions correspondant au mode d'alimentation planifié sont respectées pour les données analysées, commander un passage dans le mode d'alimentation planifié.

Selon un autre aspect, il est proposé un appareil comprenant une passerelle d'accès. La passerelle permet à au moins un dispositif d'un réseau local d'accéder à un réseau de communication étendu. L'appareil est configuré pour :
a. obtenir un mode d'alimentation planifié en fonction d'une date courante ;
b. analyser des données acheminées par la passerelle d'accès ;
c. si des conditions correspondant au mode d'alimentation planifié sont respectées pour les données analysées, commander un passage dans le mode d'alimentation planifié.

Selon un autre aspect, il est proposé un programme informatique comportant des instructions pour la mise en oeuvre de tout ou partie d'un procédé tel que défini dans les présentes lorsque ce programme est exécuté par un processeur. Selon un autre aspect, il est proposé un support d'enregistrement non transitoire, lisible par un ordinateur, sur lequel est enregistré un tel programme.

Les caractéristiques exposées dans les paragraphes suivants peuvent, optionnellement, être mises en oeuvre, indépendamment les unes des autres ou en combinaison les unes avec les autres :

Le procédé comprend en outre :
d. si les conditions ne sont pas respectées, envoyer une notification à destination d'un dispositif distinct de la passerelle d'accès.

Ceci permet d'informer en temps réel un utilisateur de la bonne mise en oeuvre du procédé, du non-déclenchement du changement de mode d'alimentation et des raisons de cette absence de déclenchement. Bien que le procédé soit automatisé, l'utilisateur reste donc informé et impliqué dans l'objectif de réduction de consommation de l'énergie. En étant informé, l'utilisateur est mieux à même d'affiner les conditions/critères correspondant à chaque mode d'alimentation planifié.

Le procédé comprend en outre :
e. en cas de réception d'une commande en réponse à l'envoi de la notification, commander un passage dans le mode d'alimentation planifié .

Ceci permet à un utilisateur de ponctuellement forcer le passage dans un mode planifié en toute connaissance de cause, et permet donc une flexibilité par rapport à des conditions/critères préétablis sans pour autant modifier les conditions/critères pour les itérations suivantes. Ceci facilite également le contrôle et la régulation de la consommation par un individu au profit d'un ensemble d'utilisateurs, typiquement le ou les adultes responsables d'un foyer.

L'analyse des données acheminées par la passerelle d'accès inclut l'une au moins des actions suivantes :
- la détection de l'encapsulation de données selon des formats ou standards prédéfinis ;
- la détection de requêtes HTTP et/ou HTTPS ;
- la détection de trames RTCP ;
- la détection de ports physiques utilisés pour l'acheminement de données ;
- la détection de ports logiciels utilisés pour l'acheminement de données ;
- la détection de paquets correspondant à de la voix transitant sous protocole IP ; et/ou
- la détection de paquets correspondant à de la vidéo transitant sous protocole IP.

Ceci permet d'affiner le paramétrage et la réduction de consommation énergétique plutôt en fonction des usages réels qu'en fonction de quantités d'énergie qui peuvent sinon être difficiles à associer à un usage précis. Ce faisant, l'utilisateur accède, par l'usage, à une connaissance et une conscience de ses propres usages et la manière dont il peut, en les adaptant, participer à la sobriété énergétique.

Le procédé comprend en outre :
f. identifier un ou des coeurs de processeurs de la passerelle d'accès non utilisés à la date courante, et désactiver ledit ou lesdits coeurs de processeurs non utilisés.

Ceci permet, en complément des modes d'alimentation planifiés, de supprimer des consommations d'énergie inutiles sans requérir aucune action spécifique d'un humain.

L'obtention du mode d'alimentation planifié se fait parmi plusieurs modes d'alimentation ordonnancés les uns par rapport aux autres en fonction d'une consommation d'énergie associée à chaque mode, et dans lequel
c'. si des conditions correspondant au mode d'alimentation planifié ne sont pas respectées pour les données analysées, et que
des conditions correspondant à un mode d'alimentation associé à une consommation d'énergie supérieure à celle associée au mode d'alimentation planifié sont respectées, commander un passage dans ledit mode d'alimentation associé à une consommation d'énergie supérieure à celle associée au mode d'alimentation planifié.

Ceci permet d'affiner encore l'ajustement de la consommation énergétique aux usages. Autrement dit, la réduction de consommation est rendue graduelle plutôt que binaire : le mode d'alimentation le mieux adapté peut être appliqué à chaque instant.

Les modes d'alimentation sont au moins au nombre de quatre, et sont chacun associés à une consommation d'énergie distincte de celle des autres modes.

Ceci permet également d'affiner l'ajustement de la consommation énergétique. Outre les deux extrêmes que sont l'extinction complète ou la consommation sans limite, il est ainsi possible de prévoir deux niveaux de régulation différents, c'est-à-dire, en langage courant, deux modes de « veilles » plutôt qu'un seul.

Le procédé comprend en outre une boucle de sorte que le procédé est réitéré de manière à être mis en oeuvre périodiquement ou en continu.

Ceci permet une meilleure réactivité de la passerelle aux changements d'usages. La latence entre une variation d'usage et l'adaptation du mode d'alimentation qui peut en découler peut être réduite pour réduire encore les consommations d'énergie inutiles ou du moins dispensables.

### Brève description des dessins

D'autres caractéristiques, détails et avantages apparaîtront à la lecture de la description détaillée ci-après, et à l'analyse des dessins annexés, sur lesquels :
**Fig. 1**

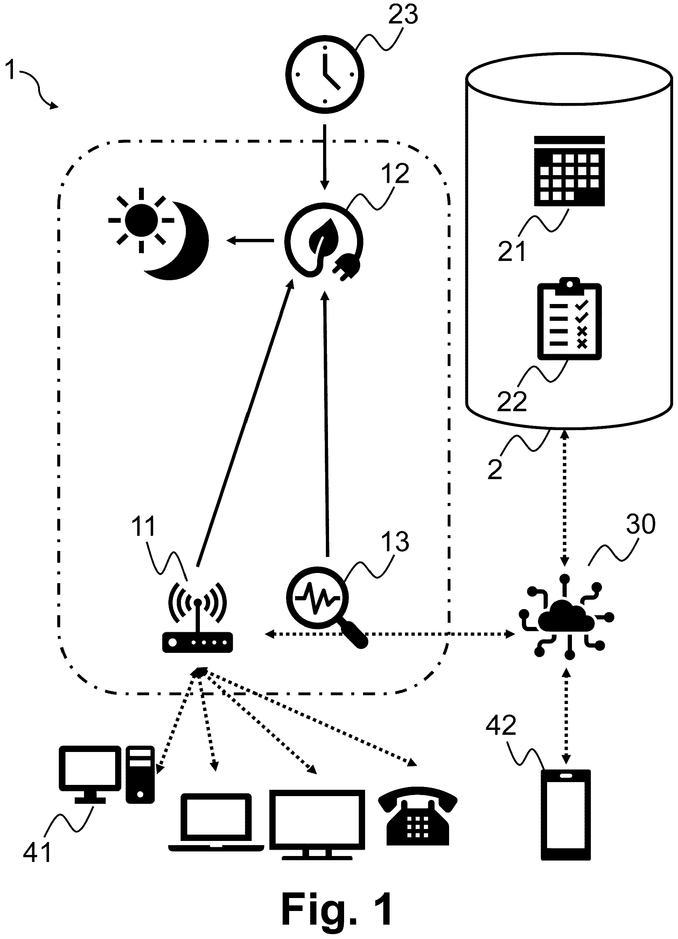

   [Fig. 1] montre un exemple schématique d'un appareil dans son environnement selon un mode de réalisation.
**Fig. 2**

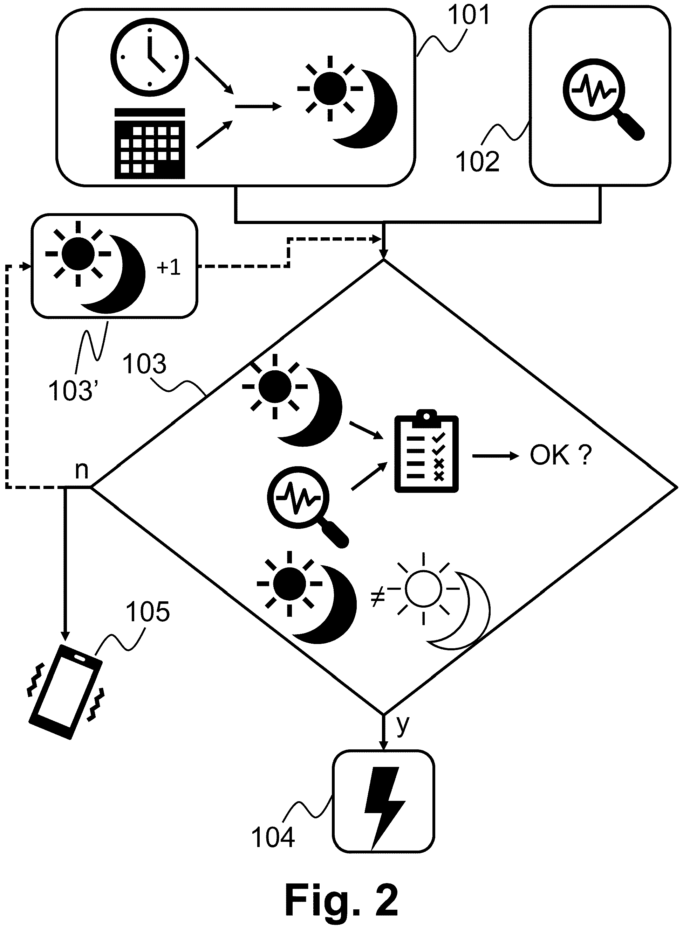

   [Fig. 2] montre un diagramme de mise en oeuvre d'un procédé selon un mode de réalisation.

### Description des modes de réalisation

Il est maintenant fait référence à la [Fig. 1]. En [Fig. 1], des composants d'un appareil électrique sont représentés schématiquement dans l'environnement de l'appareil. On désigne ici par « appareil électrique » tout dispositif fonctionnant avec une source d'énergie électrique, qu'elle soit externe (secteur ou batterie externe par exemple) ou interne (batterie interne par exemple). L'appareil électrique comprend une passerelle d'accès 1 (ou « gateway » en anglais). La passerelle d'accès 1 est un composant de l'appareil apte faire transiter des données entre d'autres composants ou périphériques de l'appareil et/ou des dispositifs tiers, distincts de l'appareil. En fonctionnement, la passerelle d'accès 1 forme par exemple un relais d'un réseau ou entre deux réseaux ou parties d'un même réseau. Dans l'exemple représenté en [Fig. 1], la passerelle d'accès 1 forme à la fois une interface entre des dispositifs 41, 42 tiers, distincts de l'appareil et connectés à un réseau de communication dit « local » et à la fois une interface entre le réseau local et un réseau de communication étendu 30, tel que le réseau IP ou Internet. La passerelle d'accès 1 achemine des paquets de données entre les dispositifs du réseau local et également entre un dispositif du réseau local et un dispositif accessible via le réseau de communication étendu.

La passerelle d'accès 1 comprend par exemple un module de communication 11 apte s'interfacer avec des dispositifs tiers, dont les dispositifs 41, 42, via des réseaux et protocoles correspondants. Par exemple, le module de communication 11 inclut un modem. Le module de communication 11 est agencé pour permettre des communications, filaires ou non, selon les standards connus en soit tels que les protocoles IP, le CPL (pour « Courant Porteur en Ligne »), les normes IEEE 802.11 ou Wifi (« pour « *Wireless Fidelity* »)*,* le Bluetooth, l'USB (pour « *Universal Serial Bus* ») et le Li-Fi (pour « *Light Fidelity* »).

Les dispositifs 41, 42 désignent ici tout dispositif électronique distinct de la passerelle d'accès 1 propre à s'y connecter et à échanger des données par l'intermédiaire de la passerelle d'accès 1 dans le réseau local ou via le réseau de communication étendu. Les dispositifs 41, 42 peuvent par exemple comprendre des ordinateurs, tablettes, ordiphones (« smartphones »), téléviseurs, combinés téléphoniques, ou bien encore des périphériques, y compris des périphériques agencés pour essentiellement émettre ou essentiellement recevoir des données par l'intermédiaire de la passerelle d'accès 1 tels que des capteurs, microphones, caméras, haut-parleurs ou téléviseurs. Un ou plusieurs dispositifs 41 peuvent être utilisés pour des usages tels que la téléphonie, y compris sous protocole IP, ou le visionnage de programmes audiovisuels en direct ou à la demande (« Live » ou « VOD » pour « *Video On Demand* ») par l'intermédiaire de la passerelle d'accès 1.

La passerelle d'accès 1 dispose, en outre, d'un accès à au moins une base de données 2. Dans l'exemple de la [Fig. 1] et dans la suite, pour faciliter la compréhension, la base de données 2 est présentée comme étant unique et distincte de la passerelle d'accès 1. Elle est par exemple stockée sur un serveur distant et distinct de l'appareil, auquel la passerelle d'accès 1 accède par l'intermédiaire du module de communication 11 et via le réseau de communication étendu 30. En variante, la base de données 2 peut être décomposée et/ou dupliquée sur plusieurs supports de stockage distincts. Certains au moins des stockages peuvent prendre la forme de composants mémoires internes à la passerelle d'accès 1 ou à l'appareil.

Dans la base de données 2 sont stockées au moins une planification 21 et une table de correspondance 22. La planification 21 inclut un jeu de données définissant un lien entre des plages de dates et des modes d'alimentation de la passerelle d'accès 1. La planification 21 prend par exemple la forme d'un calendrier hebdomadaire dans lequel des plages horaires sont associées à des modes d'alimentation planifiés. De préférence, la planification 21 est accessible en consultation et en modification par au moins un utilisateur de la passerelle d'accès 1 par l'intermédiaire d'un terminal tel qu'un ordinateur ou un smartphone au moyen d'une interface homme-machine. Ainsi, le terminal se connecte à la base de données 2, soit via un réseau local de la passerelle d'accès 1, soit via un réseau externe tel qu'internet et/ou un réseau de téléphonie mobile. Ainsi, l'utilisateur peut modifier à volonté la planification 21 pour l'adapter à ses usages et souhaits. En l'absence de mise à jour de la planification 21 par un utilisateur, des modes d'alimentation par défaut peuvent être attribués à diverses plages horaires.

La table de correspondance 22 inclut, quant à elle, un jeu de données définissant, pour chaque mode d'alimentation et/ou chaque plage horaire, un ensemble de paramètres (ou conditions) à vérifier et relatifs aux données transitant par la passerelle d'accès 1. De préférence, la table de correspondance 22 est accessible en consultation et en modification par au moins un utilisateur de la passerelle d'accès 1 par l'intermédiaire d'un terminal tel qu'un ordinateur ou un smartphone au moyen d'une interface homme-machine. Ainsi, l'utilisateur peut modifier à volonté la table de correspondance 22 pour adapter (ou limiter ponctuellement) la mise en oeuvre de la planification en fonction des usages à chaque instant. En l'absence de mise à jour de la table de correspondance 22 par un utilisateur, des paramètres par défaut peuvent être préétablis.

La mise en oeuvre de la planification avec les vérifications des paramètres ou conditions sera décrite plus en détail en référence à la [Fig. 2].

La passerelle d'accès 1 comprend en outre un module de gestion d'alimentation 12 et un module d'analyse 13 des données transitant par la passerelle d'accès 1. Le module de gestion d'alimentation 12 est configuré pour piloter l'alimentation de la passerelle d'accès 1. En d'autres termes, le module de gestion d'alimentation 12 reçoit des données en entrée, notamment du module d'analyse 13, et commande, en sortie, le passage d'un mode d'alimentation à un autre.

Le module d'analyse 13 est configuré pour analyser le type de données transitant via la passerelle d'accès 1 de manière à en déduire si les paramètres (ou conditions) définis dans la table de correspondance 22 sont ou non respectés. Le module d'analyse 13 fournit donc, en sortie, des signaux en entrée du module de gestion d'alimentation 12 interprétables par ce dernier. À titre d'exemples non limitatifs, le module d'analyse 13 peut par exemple être configuré pour analyser les flux de données transitant par la passerelle d'accès 1 et y détecter, par exemple :
- de l'encapsulation de données selon des formats/standards prédéfinis et connues pour correspondre à des flux audiovisuels, tels que le MPEG2-TS (pour « *Moving Picture Experts Group 2- Transport Stream* ») multiplexant des flux audio et vidéo (le lecteur est invité à consulter la norme ETSI 13818-1 :2018 définissant plus précisément un tel encodage) ;
- des requêtes HTTP (pour « *Hypertext Transfer Protocol* ») ou HTTPS, HTTP sécurisé ;
- des trames RTCP (pour « *Real-time Transport Control Protocol* ».

Bien entendu, les exemples qui précèdent pourront être complétés par une personne du métier en fonction des usages et normes de communication usuels. Notamment, la détection (ou l'absence de détection) de certains types de données peut être convertie en une information visant à qualifier un type d'usage associé en cours. Par exemple, la détection d'un type de flux audiovisuel tel que le MPEG2-TS peut être assimilé à un usage de type VOD. Des requêtes HTTP/HTTPS peuvent être assimilées à un usage de navigation internet via un navigateur sans contenu audiovisuel. Des trames RTCP peuvent être assimilées à un usage de communication par voix sur IP (ou téléphonie sur IP, ou VOIP).

En pratique, dans la table de correspondance 22, les paramètres relatifs aux données transitant par la passerelle d'accès 1 correspondent à ceux issus du module d'analyse 13, soit de manière brute (le type de données détectés) soit indirectement sous la forme d'usages déduits du type de données détectés. Convertir les données brutes de l'analyse en informations relatives à des usages facilite la mise à jour de la table de correspondance 22 par un utilisateur non-spécialiste. Autrement dit, il est plus aisé pour l'utilisateur de sélectionner les paramètres de la table de correspondance 22 en sélectionnant des usages tels que la téléphonie, la VOD ou la navigation sur internet plutôt qu'en sélectionnant des paramètres techniques tels que les normes utilisées pour échanger les données. La conversion des données brutes peut être mise en oeuvre par le module d'analyse 13, ou bien par le module de gestion d'alimentation 12 lui-même. Dans ce dernier cas, le module d'analyse 13 peut être absent ou être considéré comme un sous-module du module de gestion d'alimentation 12.

La passerelle d'accès 1 comprend en outre une horloge interne 23. En variante, la passerelle d'accès 1 accède à distance à une horloge. L'horloge interne 23 permet à la passerelle d'accès 1 de connaitre la date courante. On précise ici que le terme de « date » est utilisé dans son sens large : la date peut inclure une précision supérieure au jour, par exemple incluant l'heure, les minutes et les secondes. La date courante obtenue par la passerelle d'accès 1 peut être comparée à la planification 21 comme cela va être décrit ci-après.

Il est maintenant fait référence à la [Fig. 2]. Pour faciliter la compréhension, les références numériques utilisées précédemment sont réutilisées dans la suite pour désigner des éléments qui peuvent être similaires. La [Fig. 2] représente schématiquement un procédé de pilotage de l'alimentation d'une passerelle d'accès 1. La passerelle d'accès 1 (ou « gateway ») permet à au moins un dispositif 41 d'un réseau local d'accéder à un réseau de communication étendu 30 tel qu'internet. La passerelle d'accès 1 peut être, par exemple, celle décrite en référence à la [Fig. 1]. Le procédé ci-après est mis en oeuvre par ladite passerelle d'accès 1.

Dans une première opération 101, un mode d'alimentation planifié est obtenu en fonction d'une date courante. Dans l'exemple décrit ici, le module de gestion d'alimentation 12 reçoit en entrée depuis l'horloge interne 23, la date courante. Le module de gestion d'alimentation 12 reçoit aussi, en entrée depuis la base de données 2, la planification 21. En comparant la date courante et la planification 21, un mode d'alimentation planifié est déduit. Par exemple, si la date courante correspond à un jeudi à 22h et que la planification 21 indique qu'une plage horaire de 20h à 22h tous les jeudis est associée à un mode d'alimentation dit de « veille profonde », alors le mode d'alimentation planifié est celui de « veille profonde ».

Dans une deuxième opération 102, des données acheminées par la passerelle d'accès 1 sont analysées, par exemple par le module d'analyse 13. Les données acheminées désignent ici les données, ou flux de données, qui sont échangées par un ou plusieurs dispositifs 41, 42 du réseau local entre eux et/ou avec le réseau de communication étendu 30. L'analyse mise en oeuvre peut être limitée à déterminer le type ou la nature des données sans toutefois impliquer de déterminer les informations portées par lesdites données. Par exemple, pour des données HTTP, une étiquette de l'entête HTTP permet de déterminer la version utilisée et d'en déduire un usage de navigation internet via un navigateur. Toujours à titre d'exemple illustratif, les données MPEG2-TS indiquent le type de flux encapsulé dans le flux vidéo, permettant ainsi de déterminer s'il s'agit d'un flux audio ou vidéo. En ce qui concerne les données RTCP, seules les estampilles temporelles sont lues. Par exemple, il n'est pas nécessaire de déchiffrer des données chiffrées de sorte que la confidentialité des échanges est préservée. Le niveau de détail de l'analyse permet cependant de distinguer plusieurs usages distincts comme expliqué ci-avant (téléphonie, VOD, consultation de pages web, etc.). L'analyse peut aussi inclure une détection des canaux de communications utilisés, par exemple en distinguant les ports physiques et/ou logiciels utilisés. Ainsi, par exemple, un échange de données via une prise réseau particulière (tel que RJ45) peut permettre de déduire une activité sur une console de jeu préalablement associée à ladite prise. Un échange de données via le « port 80 » peut permettre de déduire un usage d'un navigateur web. Un jeu de règles de déductions peut être établi par défaut et/ou être paramétré pour s'adapter à un contexte d'application, que ce soit par un utilisateur, un opérateur ou bien au moyen de briques logicielles destinées à une telle fonction. Les résultats de l'analyse sont par exemple fournis par le module d'analyse 13 au module de gestion de l'alimentation 12.

Il est précisé que les opérations 101 et 102 sont appelées « première » et « deuxième » simplement pour les distinguer l'une de l'autre sans que cela implique un ordre chronologique de mise en oeuvre l'une par rapport à l'autre. En effet, les opérations 101 et 102 peuvent être mises en oeuvre indépendamment l'une après l'autre, en partie au moins concomitamment, périodiquement selon un pas de temps prédéterminé ou même sensiblement en continu (en « temps réel »).

Dans une troisième opération 104, un passage dans le mode d'alimentation planifié est commandé si des conditions correspondant au mode d'alimentation planifié sont respectées (d'après les résultats de l'analyse des données). Si des conditions correspondant au mode d'alimentation planifié ne sont pas respectées, le passage dans le mode d'alimentation planifié est empêché, soit par une commande d'inhibition du passage dans le mode d'alimentation planifié, soit par absence de commande. On précise que, dans le cas particulier où le mode d'alimentation planifié correspondrait au mode d'alimentation courant, la commande peut en outre être inhibée ou sans effet perceptible : le mode d'alimentation courant est préservé/maintenu.

La troisième opération 104 peut inclure une comparaison des résultats de l'analyse à des paramètres/critères associés au mode d'alimentation et/ou à la plage temporelle qui lui est associée tels que stockés dans la table de correspondance 22 par exemple. Ainsi, la vérification du respect des conditions correspondant au mode d'alimentation planifié prend la forme d'une telle comparaison. Les résultats de la comparaison sont par exemple binaires : « les conditions sont respectées » ou « les conditions ne sont pas respectées ».

Ainsi, le pilotage de l'alimentation de la passerelle d'accès 1 est rendu dépendant à la fois d'une planification préétablie (en fonction de la date courante) et à la fois en fonction de l'activité courante de ladite passerelle d'accès 1. Ce faisant, le pilotage de l'alimentation, et donc les effets en termes d'économie d'énergie, sont rendus particulièrement fins et flexibles : la consommation en énergie peut être limitée tout en permettant de réduire, voire de supprimer, les conséquences en termes d'indisponibilité de ladite passerelle d'accès 1 pour les services effectivement utilisés. Autrement dit, le compromis entre l'efficacité de la passerelle d'accès 1 et sa consommation énergétique est facilité et amélioré. Du point de vue d'un utilisateur, le bridage de l'alimentation en énergie est rendu « transparent » ou « indolore », ce qui participe à une meilleure acceptation des mesures de limitation de consommation, à une réduction du risque de contournement ou de neutralisation des mesures de limitation énergétique à l'initiative de l'utilisateur humain, et donc, à terme et en pratique, à une amélioration de la sobriété énergétique de la passerelle d'accès.

En outre, la mise en oeuvre de tels procédés de pilotage implique la disponibilité de composants matériels couramment dans le commerce et dans les équipements existants. Il est donc techniquement possible de mettre en oeuvre de tels procédés par des mises à jour logicielles sans intervention physique sur certains appareils existants.

Dans l'exemple représenté en [Fig. 2], le mode de réalisation comprend une quatrième opération 105 optionnelle. La quatrième opération 105 comprend l'envoi d'une notification à destination d'un dispositif 41, distinct de la passerelle d'accès 1, tel qu'un smartphone à disposition d'un utilisateur. On désigne ici par « notification » toute donnée, signal ou commande interprétable par ledit dispositif 41 pour ensuite transmettre une information perceptible et compréhensible par un utilisateur humain. Ladite information peut par exemple être celle de l'inhibition du passage dans le mode d'alimentation planifié. Elle peut en outre inclure les raisons d'une telle inhibition. À titre purement illustratif, l'information peut être un message affiché par le dispositif 41 indiquant : « *Selon vos réglages, votre Livebox aurait dû passer en veille profonde à 21h. Cependant, il semblerait que l'un au moins des membres de votre foyer utilise actuellement un service de Vidéo à la demande. Le passage en mode veille profonde est donc suspendu. ».*

Dans des modes de réalisation, il peut être prévu qu'à réception d'une commande, le passage dans le mode d'alimentation planifié, ou un autre mode d'alimentation, soit forcé indépendamment du mode d'alimentation planifié et/ou du respect/non-respect des conditions. Autrement dit, il peut être laissé la possibilité à un utilisateur d'imposer un mode d'alimentation en contournant le procédé décrit ci-avant par l'intermédiaire d'une interface homme-machine. Une telle commande peut être générée spontanément (par un utilisateur) depuis un dispositif 41 à destination de la passerelle d'accès 1 ou bien résulter d'une action en réponse à la réception d'une notification émise par la passerelle d'accès 1. Sur la base de l'exemple illustratif ci-avant, le message de la notification peut par exemple être complété d'une invitation à émettre une commande. Par exemple, le message précédent peut être complété d'une question : « *Souhaitez-vous forcer le passage en mode veille profonde ?* » et d'un bouton « *Oui* » dont l'activation déclenche l'envoi de la commande à destination de la passerelle d'accès 1.

La notification et/ou l'invite de commande peuvent par exemple s'afficher sur un écran d'un smartphone et/ou d'un téléviseur connecté à la passerelle d'accès 1. Bien entendu, les exemples précités quant à la forme et la manière dont sont envoyées les notifications ainsi que les aspects relatifs à la présentation des informations qui peuvent en découler visent à faciliter la compréhension du lecteur, ne sont nullement limitatifs et pourront être adaptés au contexte d'application.

Dans des modes de réalisation, une série d'opérations telle que décrite ci-avant peut être réitérée. Autrement dit, les exemples de procédés décrits peuvent former une boucle et être réitérés périodiquement, voire en continu. Ainsi, le passage au mode d'alimentation planifié peut être suspendu tant que les conditions ne sont pas respectées puis être déclenché dès que les conditions sont respectées. Par exemple, la passerelle d'accès 1 peut passer en mode « veille profonde » dès l'interruption de l'usage de la VOD et alors même qu'un tel passage était planifié plus tôt.

Dans des modes de réalisation, les divers modes d'alimentation sont ordonnancés les uns par rapport aux autres en fonction d'une consommation d'énergie nominale associée à chaque mode. Dans ces modes de réalisation, une opération supplémentaire et optionnelle peut être mise en oeuvre après la troisième opération 103 : si des conditions correspondant au mode d'alimentation planifié ne sont pas respectées pour les données analysées, et que des conditions correspondant à un mode d'alimentation associé à une consommation d'énergie supérieure à celle associée au mode d'alimentation planifié sont respectées, alors une commande d'un passage dans ledit mode d'alimentation associé à une consommation d'énergie supérieure à celle associée au mode d'alimentation planifié est envoyée. Cela permet d'affiner encore l'adéquation de la consommation d'énergie avec les usages courants. En effet, un usage peu consommateur d'énergie peut ainsi être préservé en inhibant une interruption planifiée totale ou quasi-totale de l'énergie, tout en réduisant l'énergie consommée d'une quantité inutile au maintien de l'usage. Dans le cas d'un grand nombre de modes d'alimentation possibles (trois ou plus), il est possible de réitérer plusieurs fois spécifiquement la mise en oeuvre de la troisième opération 103 (boucle partielle) afin d'atteindre un mode d'alimentation le plus adapté à l'usage courant.

Dans des modes de réalisation particuliers, pour un mode d'alimentation donné, il est possible de diminuer la consommation énergétique en désactivant tous les coeurs de processeurs actifs qui ne sont pas nécessaires au fonctionnement de l'activité courante. Par exemple, au lieu de passer en mode d'alimentation « veille profonde », le mode d'alimentation reste en « veille légère » mais la consommation de ce mode « veille légère » est diminuée.

Dans des modes de réalisation, les modes d'alimentation sont au moins au nombre de quatre. Les modes d'alimentation peuvent être chacun associé à une consommation d'énergie distincte de celle des autres modes.

À titre illustratif, un jeu de mode d'alimentation peut comprendre les modes suivants ordonnancés dans l'ordre suivant :
- un premier mode, par exemple qualifié d'« éteint », associé à une consommation nulle ;
- un deuxième mode, par exemple qualifié de « veille profonde », associé à une consommation faible non nulle ;
- un troisième mode, par exemple qualifié de « veille légère », associé à une consommation élevée limitée ;
- un quatrième mode, par exemple qualifié d'« actif », associé à une consommation illimitée.

Outre un mode totalement éteint et un mode actif illimité, l'existence de deux modes distincts permet, par une adaptation des conditions à respecter, d'autoriser certains usages et pas d'autres en fonction des consommations d'énergie associées. Dans l'exemple des box internet, les paramétrages de la veille légère peuvent correspondre à des usages généralement peu consommateurs d'énergie mais qu'il est préférable de maintenir opérationnel en continu tels que la téléphonie (sans flux vidéo) et des sous-systèmes domotiques tels qu'un système d'alarme. La veille profonde peut correspondre à l'extinction de tout usage à l'exception du pilotage de l'alimentation lui-même.

À titre d'exemple illustratif, la planification 21 peut inclure un mode d'alimentation « veille profonde » tous les jours entre minuit et 5h du matin. La table de correspondance 22 peut inclure, quant à elle, une condition à respecter associée au mode d'alimentation planifié (ici « veille profonde »), et/ou à la plage horaire précitée (ici 00h-05h). La condition peut être que les services TV soient inactifs. Ladite condition peut être limitée à une partie de la plage horaire précitée, par exemple de minuit à une heure du matin. Ainsi, lorsque l'heure courante passe de 23h59 à 00h00, mais qu'un service TV est actif, le mode d'alimentation n'est pas modifié. Au-delà d'une heure du matin, le mode d'alimentation peut être modifié et passer « veille profonde », même si le service TV est actif.

Dans ce qui précède, le procédé est mis en oeuvre localement, c'est-à-dire par ladite passerelle d'accès 1 elle-même. En variante, la mise en oeuvre peut être en partie au moins déportée, y compris via le réseau de communication étendu. Ainsi, l'alimentation de la passerelle d'accès est pilotée à distance et reçoit des commandes depuis un composant logiciel distinct hébergé à distance. La mise en oeuvre à distance du procédé de pilotage permet notamment de mutualiser les moyens et de piloter une pluralité de passerelles d'accès à distance.

### Application industrielle

Les présentes solutions techniques peuvent trouver à s'appliquer notamment dans les équipements réseaux configurés pour former des passerelles d'accès tels que les appareils communément appelés « box internet » et destinés à former des interfaces entre les réseaux étendus de télécommunication et les réseaux de communication locaux, généralement privés.

La présente divulgation ne se limite pas aux exemples de procédés, appareils, programmes informatiques et supports d'enregistrements de tels programmes décrits ci-avant, seulement à titre d'exemple, mais elle englobe toutes les variantes que pourra envisager la personne du métier dans le cadre de la protection recherchée.

### Liste des signes de référence

- 1 : passerelle d'accès
- 11 : module de communication
- 12 : module de gestion d'alimentation
- 13 : module d'analyse
- 21 : planification
- 22 : table de correspondance
- 23 : horloge interne
- 30 : réseau de communication étendu
- 41 : dispositif
- 42 : dispositif
- 101 : obtention
- 102 : analyse
- 103 : comparaison
- 104 : commande
- 105 : envoi.

## Revendications

1. Procédé de pilotage de l'alimentation d'une passerelle d'accès (1), ladite passerelle permettant à au moins un dispositif (41) d'un réseau local d'accéder à un réseau de communication étendu (30), le procédé étant mis en oeuvre par la passerelle d'accès et comprenant :
a. obtenir (101) un mode d'alimentation planifié en fonction d'une date courante ;
b. analyser (102) des données acheminées par la passerelle d'accès ;
c. si des conditions correspondant au mode d'alimentation planifié sont respectées pour les données analysées, commander (104) un passage dans le mode d'alimentation planifié.

2. Procédé selon la revendication précédente comprenant en outre : d. si les conditions ne sont pas respectées, envoyer (105) une notification à destination d'un dispositif (41) distinct de la passerelle d'accès (1).

3. Procédé selon la revendication précédente comprenant en outre :
e. en cas de réception d'une commande en réponse à l'envoi de la notification, commander (104) un passage dans le mode d'alimentation planifié.

4. Procédé selon l'une des revendications précédentes, dans lequel l'analyse des données acheminées par la passerelle d'accès inclut l'une au moins des actions suivantes :
- la détection de l'encapsulation de données selon des formats ou standards prédéfinis ;
- la détection de requêtes HTTP et/ou HTTPS ;
- la détection de trames RTCP ;
- la détection de ports physiques utilisés pour l'acheminement de données ;
- la détection de ports logiciels utilisés pour l'acheminement de données ;
- la détection de paquets correspondant à de la voix transitant sous protocole IP ; et/ou
- la détection de paquets correspondant à de la vidéo transitant sous protocole IP.

5. Procédé selon l'une des revendications précédentes, comprenant en outre,
f. identifier un ou des coeurs de processeurs de la passerelle d'accès non utilisés à la date courante, et désactiver ledit ou lesdits coeurs de processeurs non utilisés.

6. Procédé selon l'une des revendications précédentes, dans lequel l'obtention du mode d'alimentation planifié se fait parmi plusieurs modes d'alimentation ordonnancés les uns par rapport aux autres en fonction d'une consommation d'énergie associée à chaque mode, et dans lequel
c'. si des conditions correspondant au mode d'alimentation planifié ne sont pas respectées pour les données analysées, et que
des conditions correspondant à un mode d'alimentation associé à une consommation d'énergie supérieure à celle associée au mode d'alimentation planifié sont respectées, commander un passage dans ledit mode d'alimentation associé à une consommation d'énergie supérieure à celle associée au mode d'alimentation planifié.

7. Procédé selon l'une des revendications précédentes, dans lequel les modes d'alimentation sont au moins au nombre de quatre, et sont chacun associés à une consommation d'énergie distincte de celle des autres modes.

8. Procédé selon l'une des revendications précédentes, comprenant en outre une boucle de sorte que le procédé est réitéré de manière à être mis en oeuvre périodiquement ou en continu.

9. Appareil comprenant une passerelle d'accès (1), ladite passerelle permettant à au moins un dispositif (41) d'un réseau local d'accéder à un réseau de communication étendu (30), l'appareil étant configuré pour :
a. obtenir (101) un mode d'alimentation planifié en fonction d'une date courante ;
b. analyser (102) des données acheminées par la passerelle d'accès ;
c. si des conditions correspondant au mode d'alimentation planifié sont respectées pour les données analysées, commander (104) un passage dans le mode d'alimentation planifié.

10. Programme informatique comportant des instructions pour la mise en oeuvre du procédé selon l'une des revendications 1 à 8 lorsque ce programme est exécuté par un processeur.

11. Support d'enregistrement non transitoire lisible par un ordinateur sur lequel est enregistré un programme pour la mise en oeuvre du procédé selon l'une des revendications 1 à 8 lorsque ce programme est exécuté par un processeur.
